# FASCICULE DE BREVET EUROPEEN

(11) **EP 2 738 900 B1**
(45) Date de publication et mention de la délivrance du brevet: **02.09.2015**
(21) Numéro de dépôt: 13194879.6
(22) Date de dépôt: 28.11.2013
(51) Int. Cl.: H02J 1/00, H02J 3/00, H02J 3/14, H02J 5/00

(54) **Système d'alimentation en énergie électrique continue d'au moins deux charges à partir d'une source d'énergie électrique alternative et procédé de démarrage d'un tel système d'alimentation**
Kontinuierliches Stromeinspeisungssystem von mindestens zwei Ladungen von einer alternativen Stromquelle aus, und Verfahren zum Starten eines solchen Einspeisungssystems
System for supplying DC power to at least two loads from an AC power source and method for starting such a power supply system

(30) Priorité: 30.11.2012 FR 1261501
(43) Date de publication de la demande: 04.06.2014
(73) Titulaire: Schneider Electric Industries SAS, 92500 Rueil-Malmaison (FR)
(72) Inventeur: Meysenc, Luc, 38710 Mens (FR); Barstz, Daniel, 38000 Grenoble (FR); Waterlot, Frédéric, 73190 St Baldoph (FR)
(74) Mandataire: Myon, Gérard Jean-Pierre

(56) Documents cités:
- EP-A1- 1 213 814
- US-A1- 2003 085 689

## Description

La présente invention concerne un système d'alimentation en énergie électrique continue d'au moins deux charges à partir d'une source d'énergie électrique alternative. Ce système comprend un bus de circulation de l'énergie électrique alternative propre à être reliée à la source d'énergie électrique alternative et au moins un convertisseur d'énergie alternative en énergie continue, relié au bus de circulation.

La présente invention concerne aussi un procédé de démarrage d'un tel système d'alimentation en énergie électrique continue d'au moins deux charges.

Le démarrage d'une installation d'alimentation en énergie électrique continue ou son redémarrage par exemple après une coupure d'alimentation n'est pas sans problème. En effet, chaque charge a besoin d'un temps de chargement de ses capacités qui est souvent différent d'une charge à l'autre et retarde le démarrage de cette charge.

Les charges sont par exemple des commutateurs de communication (de l'anglais *communication switch*), des passerelles, des automates, des serveurs de données, et des appareils de protection.

Pour démarrer ou redémarrer correctement une telle installation, il y a généralement un ordre préféré, tel que celui décrit ci-après. Au démarrage, les commutateurs, par exemple des commutateurs Ethernet ou des passerelles, sont alimentés en premier. Ensuite, ce sont les automates, puis les variateurs de fréquence qui doivent être alimentés. Suivant l'installation, des relais, puis des appareils de protection et de contrôle de commande sont ensuite alimentés. Le démarrage ou le redémarrage d'une telle installation comportant ces différentes charges doit donc être effectué par un expert connaissant bien les connexions des différentes charges au système d'alimentation et les temps de démarrage de chacune des charges afin de démarrer chaque charge à l'instant adéquat. Le démarrage ou le redémarrage d'une telle installation peut alors durer plusieurs heures.

Un système permettant de décaler temporellement l'alimentation de charges est connu du document US-A-2003/085689.

Le but de l'invention est donc de proposer un système d'alimentation en énergie électrique continue d'au moins deux charges permettant un redémarrage plus rapide, tout en ne nécessitant pas la présence d'un expert.

A cet effet, l'invention a pour objet un système d'alimentation en énergie électrique continue, d'au moins deux charges à partir d'une source d'énergie électrique alternative, le système comprenant :
- un bus de circulation de l'énergie électrique alternative propre à être reliée à la source d'énergie électrique alternative;
- au moins un convertisseur d'énergie alternative en énergie continue, relié au bus de circulation;
- au moins deux interfaces de connexion, chaque interface de connexion étant reliée à un convertisseur correspondant et étant propre à être reliée à au moins une charge électrique pour l'alimentation en énergie continue de la ou chaque charge correspondante ; et
- des moyens de commande des interfaces de connexion, les moyens de commande étant propres à décaler temporellement l'instant de démarrage de l'alimentation en énergie continue d'une interface à l'autre.

Suivant d'autres aspects avantageux de l'invention, le système d'alimentation comprend une ou plusieurs des caractéristiques suivantes, prises isolément ou suivant toutes les combinaisons techniquement possibles :
- la source d'énergie électrique alternative est une source de courant alternatif, et chaque convertisseur est relié au bus de circulation via un transformateur de courant ;
- la source d'énergie électrique alternative est une source de tension alternative, et chaque convertisseur est relié au bus de circulation via un transformateur de tension ;
- les interfaces de connexion comprennent au moins un interrupteur commandable et les moyens de commande sont propres à commander la fermeture du ou de chaque interrupteur commandable ;
- les moyens de commande sont propres à envoyer un signal de fermeture à le ou chaque interrupteur en fonction d'un signal de démarrage d'alimentation reçu ;
- le signal de fermeture commande un moyen de temporisation propre à chaque interface de connexion respective ;
- le système comprend une source d'énergie électrique alternative, ladite source d'énergie électrique alternative étant propre à émettre le signal de démarrage d'alimentation ;
- le signal de démarrage d'alimentation est un signal radioélectrique, et les moyens de commande comportent un récepteur radioélectrique ;
- le signal de démarrage d'alimentation est un signal d'énergie électrique transmis via le bus de circulation de l'énergie électrique alternative ;
- le système comprend deux bus de circulation de l'énergie électrique alternative, propres à être reliées en parallèle à deux sources d'énergie électrique alternative, le ou chaque convertisseur étant relié aux deux bus de circulation ; et
- les interfaces de connexion sont propres à être reliées à une pluralité de charges via une barre de courant.

L'invention a également pour objet un procédé de démarrage d'un système d'alimentation en énergie électrique continue d'au moins deux charges, le système comprenant un bus de circulation d'énergie électrique alternative, au moins un convertisseur d'énergie alternative en énergie continue, aux moins deux interfaces de connexion étant reliée à un convertisseur correspondant et étant propre à être reliée à au moins une charge électrique pour l'alimentation en énergie continue de la ou chaque charge correspondante,
le procédé comprenant les étapes suivantes :
- démarrer la circulation de l'énergie électrique alternative dans le bus de circulation;
- décaler temporellement l'instant de démarrage de l'alimentation en énergie continue d'une interface à l'autre, le décalage étant commandé par des moyens de commande.

Les caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système d'alimentation selon l'invention, relié à une source de courant alternative et comprenant plusieurs convertisseurs d'énergie alternative en énergie continue ;
- la figure 2 est une représentation schématique d'un convertisseur de la figure 1, relié à cinq interfaces de connexion ;
- la figure 3 est un schéma électrique des interfaces de connexion de la figure 2 et de moyens de commande de ces interfaces de connexion ;
- la figure 4 est un organigramme d'un procédé de démarrage du système d'alimentation selon l'invention ;
- la figure 5 est une vue analogue à celle de la figure 1 selon un deuxième mode de réalisation, le système d'alimentation comprenant deux bus de circulation d'énergie électrique ;
- la figure 6 est une vue analogue à celle de la figure 1 selon un troisième mode de réalisation de l'invention, le système d'alimentation étant relié à une source de tension alternative ; et
- la figure 7 est une vue analogue à celle de la figure 1 selon un quatrième mode de réalisation de l'invention, les interfaces de connexion étant propres à être reliées à une pluralité de charges via une barre de courant.

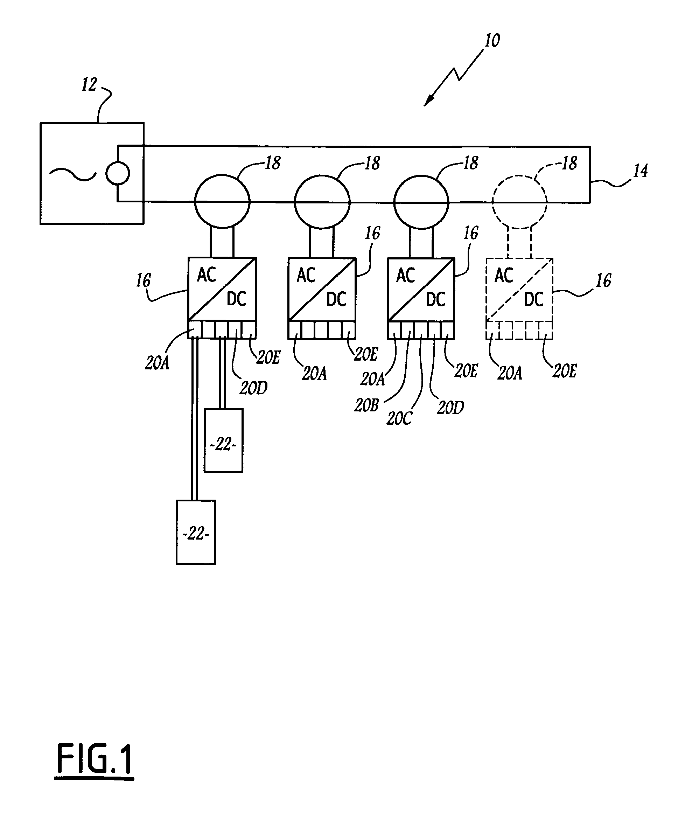

Sur la figure 1, un système d'alimentation 10 est relié à une source de courant alternatif 12. Le système d'alimentation 10 comprend un bus 14 de circulation de l'énergie électrique alternative reliée à la source de courant alternatif 12, au moins un convertisseur d'énergie alternative en énergie continue 16 relié au bus de circulation 14 via un transformateur de courant 18, et au moins deux interfaces de connexion 20A, 20B, 20C, 20D, 20E, chaque interface de connexion 20A, .., 20E étant d'une part reliée à un convertisseur 16 correspondant, et d'autre part propre à être reliée à une ou plusieurs charges électriques 22.

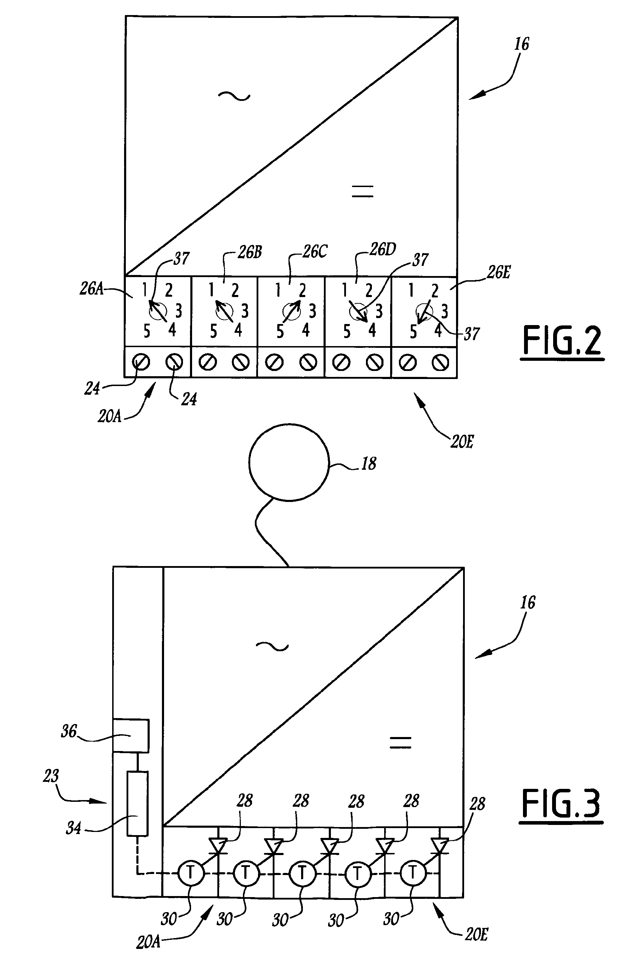

Le système d'alimentation 10 comprend en outre des moyens 23 de commande des interfaces de connexion 20A, .., 20E, les moyens de commande 23, visibles sur la figure 3, étant propres à décaler temporellement l'instant de démarrage de l'alimentation en énergie continue d'une interface de connexion à l'autre.

Dans l'exemple de réalisation de la figure 1, le système d'alimentation 10 comprend trois convertisseurs 16 et trois transformateurs de courant 18 reliant chaque convertisseur 16 au bus de circulation 14, qui est une boucle de courant. Le système d'alimentation 10 comprend, par exemple, pour chaque convertisseur 16, cinq interfaces de connexion 20A, 20B, 20C, 20D, 20E, à savoir une première interface de connexion 20A, une deuxième interface de connexion 20B, une troisième interface de connexion 20C, une quatrième interface de connexion 20D et une cinquième interface de connexion 20E. Sur la figure 1, un quatrième convertisseur 16 est représenté en pointillés afin d'indiquer que d'autres convertisseurs 16 sont susceptibles d'être reliés à la boucle de circulation 14.

Le système 10 est, par exemple, un système de basse tension, apte à fournir des tensions comprises entre 110 V et 600 V aux charges 22.

La source de courant alternatif 12 est, par exemple, une alimentation régulée propre à adapter la tension d'alimentation de la boucle 14 afin de fournir le courant nécessaire. Le courant propre à circuler dans la boucle 14 est alors maintenu au niveau souhaité grâce à l'alimentation régulée 12.

Dans l'exemple de réalisation de la figure 1, la boucle 14 permet la circulation d'un courant alternatif. La boucle 14 est, par exemple, réalisée par un câble haute tension. Le câble haute tension comporte un conducteur métallique à l'intérieur, qui est adapté à transporter un courant alternatif d'une valeur assez importante, et plusieurs couches d'isolation, non représentés. Le câble haute tension présente un isolement jusqu'à 10 à 12 kV. L'utilisation d'un tel câble pour la boucle de circulation 14 permet de distribuer de l'énergie avec un niveau d'isolation importante et économique.

Chaque convertisseur d'énergie alternative en énergie continue 16, également appelé redresseur, est connu en soi. Chaque convertisseur 16 est relié du côté alternatif à la boucle de circulation 14 via un transformateur de courant 18 correspondant, et du côté continu à une ou plusieurs interfaces de connexion 20A, .., 20E.

Chaque transformateur de courant 18 est, par exemple, un tore dans lequel passe la boucle 14. Des transformateurs de courant 18, dans lesquels le tore s'ouvre comme une pince, sont connus. Ces transformateurs de courant 18 sont donc positionnables autour de la boucle 14 sans que le courant soit interrompu (*Hot-Plug* en anglais).

Suivant le dimensionnement des tores 18 en nombre de spires et la section des conducteurs de ces spires, le rapport de transformation varie. La tension est, par exemple, égale à 12V si chaque tore ponctionne 500 mA en 24V en tension continue sous un courant nominal de 10A dans la boucle 14, avec dix convertisseurs 16 reliés chacun à la boucle 14 via un tore 18 correspondant.

Chaque interface de connexion 20A, .., 20E est propre à être reliée à une ou plusieurs charges électriques 22 pour l'alimentation en énergie continue de la ou chaque charge correspondante.

Chaque interface de connexion 20A, .., 20E comporte deux bornes de connexion 24 et un moyen de sélection 26A, .., 26E comme montré sur la figure 2. Les deux bornes de connexion 24 correspondent à une borne de connexion positive et une borne de connexion négative, ce qui permet la connexion d'au moins une charge 22 par interface de connexion 20A, ..., 20E.

En variante non représentée, chaque interface de connexion 20A, .., 20E comporte une seule borne de connexion 24, le système 10 comporte en outre une masse électrique commune pour l'ensemble des interfaces de connexion 20A, .., 20E.

En variante encore, non représentée, chaque interface de connexion 20A, .., 20E comporte deux bornes de connexion 24, à savoir une borne de connexion positive et une borne de connexion négative, et toutes les bornes de connexion négatives sont reliées à une masse électrique commune, non représentée.

Chaque interface de connexion 20A, .., 20E comporte un interrupteur 28 et un moyen de temporisation 30, comme représenté sur la figure 3 qui illustre un schéma électrique des interfaces de connexion 20A, .., 20E et des moyens de sélection 26.

Les charges électriques 22 sont, par exemple, des commutateurs de communication, des passerelles, des automates, des serveurs de données, ou encore des appareils de protection.

Les moyens de commande 23 comprennent un contrôleur 34 et une interface de communication 36 propre à recevoir un signal de démarrage d'alimentation et à le transmettre au contrôleur 34.

Les moyens de sélection 26A, .., 26E permettent la sélection d'un délai de démarrage prédéfini à l'aide d'un sélecteur 37, par exemple entre une position « 1 » et une position « 5 ». Les moyens de sélection 26A, .., 26E comporte au moins deux positions distinctes. Le sélecteur 37 est, par exemple, un sélecteur manuel.

L'interrupteur 28 est, par exemple, un transistor, un thyristor ou encore tout autre interrupteur commandable électroniquement. L'interrupteur 28 est propre à permettre la circulation de l'énergie continue du convertisseur 16 vers les bornes de connexion 24 correspondantes lorsqu'il est en position fermée, et à interrompre ladite circulation lorsqu'il est en position ouverte.

Le moyen de temporisation 30 est, par exemple, un moyen électronique de temporisation. Le moyen électronique de temporisation 30 comporte, par exemple, un microcontrôleur, non représenté, propre à gérer la temporisation et à sélectionner la valeur de ladite temporisation en fonction de la position du sélecteur 37.

Chaque moyen de temporisation 30 est propre à mettre en oeuvre une temporisation de durée variable d'un moyen de temporisation à l'autre. La temporisation présente une valeur comprise, par exemple, entre 0 seconde et 60 secondes.

Les moyens de temporisation 30 sont connectés entre les interrupteurs 28 et les moyens de commande 23. Les moyens de temporisation 30 sont commandés par les moyens de sélection 26. Les moyens de temporisation 30 présentent, par exemple, un nombre prédéterminé de valeurs prédéfinies de temporisation, chaque valeur prédéfinie de temporisation étant associée à une position respective des moyens de sélection 26.

Le contrôleur 34 est apte à recevoir un signal de démarrage d'alimentation via l'interface de communication 36. Le contrôleur 34 est relié aux moyens de temporisation 30, comme représenté en traits pointillés sur la figure 3.

L'interface de communication 36 est, par exemple, une interface radioélectrique apte à recevoir un signal radioélectrique de démarrage d'alimentation. En variante, l'interface de communication 36 est une interface câblée apte à recevoir un signal électrique de démarrage d'alimentation, par exemple via le transformateur de courant 18.

Le système 10 fonctionne comme suit. Lors du déploiement du système d'alimentation 10, une temporisation de démarrage est choisie pour chaque interface de connexion 20A, .., 20E, c'est-à-dire pour chaque charge électrique 22 ou chaque groupe de charges 22 reliées à l'interface de connexion correspondante. A titre d'exemple, la position « 1 » du moyen de sélection 26 correspond à un démarrage de la charge 22 une seconde après réception du signal de commande issu du contrôleur 34. La position « 2 » représente à titre d'exemple une temporisation de démarrage de 10 secondes à compter de la réception dudit signal de commande. De manière analogue, la position « 3 » correspond à un démarrage 30 secondes après réception dudit signal de commande, la position « 4 » à un démarrage après 40 secondes et la position « 5 » à un démarrage après 50 secondes. Bien sûr, d'autres valeurs de temporisation sont possibles. La temporisation adaptée à une charge est choisie au moment du déploiement du système d'installation 10, c'est-à-dire au moment de la connexion d'une charge 22 à un convertisseur 16 donné. La temporisation est modifiable ultérieurement en changeant simplement la position du sélecteur 37 sur le moyen de sélection 26.

A titre d'exemple, un commutateur Ethernet est relié à l'interface de connexion 20A d'un convertisseur 16. Le moyen de sélection 26A correspondant est alors mis sur la position « 1 », car un commutateur doit être alimenté en premier. Un automate est connecté à l'interface de connexion 20B du même convertisseur 16. Le moyen de sélection 26B correspondant est mis sur la position « 2 » pour assurer que l'automate démarre après le commutateur Ethernet. A l'interface de connexion 20C est relié un variateur de fréquence. Le moyen de sélection 26C correspondant est alors mis sur la position « 3 » pour que le variateur de fréquence démarre après le commutateur et l'automate. A l'interface 20D est relié un relais, tel qu'un relais dit intelligent qui doit démarrer après le commutateur Ethernet, après l'automate et aussi après le variateur de fréquence. Le moyen de sélection 26D est alors mis sur la position « 4 ». Enfin, à l'interface 20E est relié un appareil de protection. Il doit démarrer en dernier et le moyen de sélection 26E est alors mis sur la position « 5 ». Les instants de démarrage de chaque charge 22 sont ainsi par exemple choisis lors de la connexion des différentes charges 22, tout en étant modifiables ensuite.

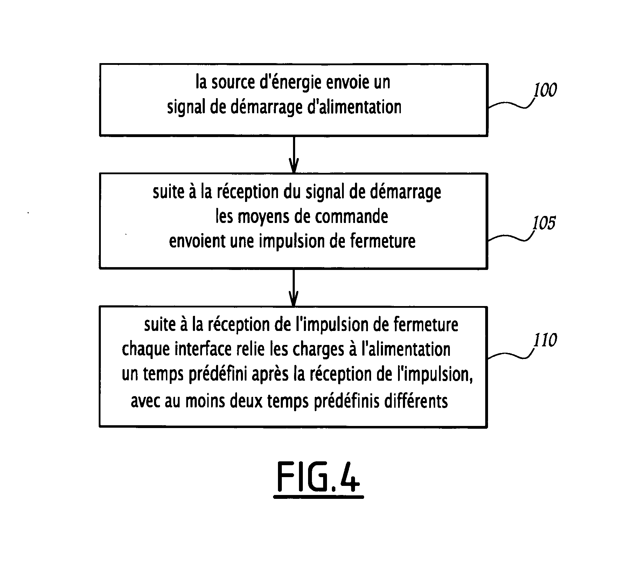

La figure 4 représente un organigramme des étapes d'un procédé de démarrage. Lors de l'étape initiale 100, au démarrage du système 10, c'est-à-dire lorsque la source d'énergie 12 commence à fournir de l'énergie électrique alternative au bus de circulation, un signal de démarrage d'alimentation est envoyé. Le signal de démarrage d'alimentation est, par exemple, envoyé par la source d'énergie 12.

Le signal de démarrage d'alimentation est par exemple envoyé à l'issue d'un autotest, également appelé autocontrôle, de la source d'énergie 12.

Le signal de démarrage d'alimentation est transmis via la boucle de courant 14 et les transformateurs de courant 18 jusqu'au contrôleur 34, en passant par l'interface de communication 36. En variante encore, la transmission du signal de démarrage est faite par courant porteur en ligne (CPL).

Alternativement, comme indiqué précédemment, le signal de démarrage est par exemple un signal radio transmis directement par ondes radioélectriques entre la source d'énergie 12 et l'interface de communication 36. Le signal radio est, par exemple, conforme au protocole ZigBee, protocole de communication basé sur la norme IEEE 802.15.4. C'est avantageux dans des systèmes 10 avec un grand nombre de convertisseurs 16.

Lors d'une deuxième étape 105, les moyens de commande 23 et plus précisément le contrôleur 34 envoie, suite à la réception du signal de démarrage, une impulsion de fermeture aux interrupteurs 28 ou plus précisément aux moyens de temporisation 30 associés aux interrupteurs 28. Si plusieurs convertisseurs 16 sont reliés au bus 14, tous les contrôleurs 34 de tous les convertisseurs 16 envoient suite à la réception du signal de démarrage une impulsion de fermeture aux moyens de temporisation 30. En variante, l'impulsion de fermeture est aussi générée par le ou les transformateurs de courant 18, puis simplement retransmise par les contrôleurs 34.

Le signal de démarrage d'alimentation permet donc une synchronisation des différents convertisseurs 16 et des différentes interfaces de connexion 20A, ..., 20E. Des charges 22 reliées à différents convertisseurs 16 mais dont les interfaces de connexions 20A, ..., 20E présentent toutes une sélection de temporisation identique, vont alors toutes démarrer en même temps.

L'impulsion de fermeture commande les moyens de temporisation 30 de chaque interface de connexion 20A,...20E. Les moyens de temporisation 30 reçoivent simultanément l'impulsion de fermeture et commandent ensuite individuellement et suivant la temporisation sélectionnée la fermeture de l'interrupteur 28 correspondant. La charge 22 est alors alimentée en tension continue après expiration de la temporisation prédéfinie (étape 110).

On conçoit ainsi qu'avec le système 10 d'alimentation selon l'invention il suffit de fixer les instants de démarrage des différentes charges 22 lors du déploiement du système 10. Chaque démarrage ou redémarrage est ensuite fait dans l'ordre chronologique prévu initialement. C'est au moment de la conception du système que l'expert tient compte des différentes capacités à charger dans les différentes charges 22 et de l'ordre de démarrage voulu des différentes charges 22. Un démarrage du système 10 ne requiert plus qu'une durée de l'ordre d'une minute à cinq ou dix minutes. Par contre, le temps de redémarrage complet du système d'alimentation de l'état de la technique peut prendre plusieurs heures de manipulation diverses et de connexions réalisées manuellement par l'opérateur.

Le système d'alimentation 10 facilite ainsi la conception des réseaux d'alimentation auxiliaire, permet la modification de l'ordre de démarrage des charges 22 sans décâblage. Ce système d'alimentation 10 facilite aussi l'ajout d'appareil(s) communicant(s) dans un tableau électrique sans ajout de nouvelle alimentation auxiliaire.

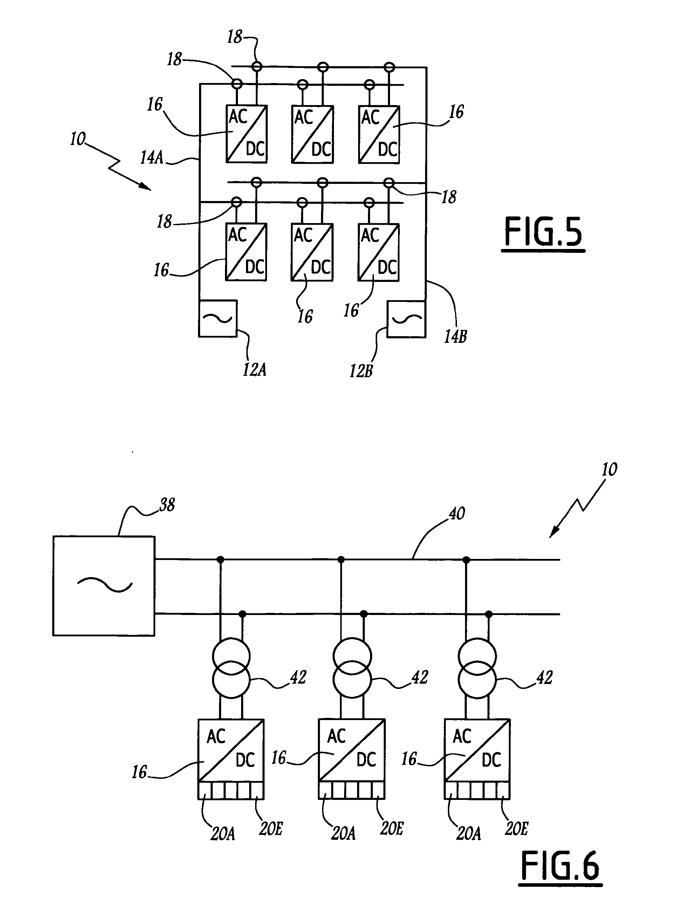

La figure 5 illustre un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, le système d'alimentation 10 comprend deux boucles 14A, 14B de circulation de l'énergie électrique alternative, chaque boucle étant propre à être reliée à une source d'énergie électrique alternative 12A, 12B respective, le ou chaque convertisseur 16 étant relié aux deux boucles de circulation par des tores 18. La boucle 14A est reliée à la source de courant alternatif 12A. La boucle 14B est reliée à la source de courant alternatif 12B.

Le fonctionnement de ce deuxième mode de réalisation est analogue à celui du premier mode de réalisation décrit précédemment, et n'est pas décrit à nouveau.

Les avantages de ce deuxième mode de réalisation sont analogues à ceux du premier mode de réalisation décrit précédemment. Le deuxième mode de réalisation permet en outre une redondance, chaque convertisseur 16 étant relié à deux sources de courant 12A, 12B.

La figure 6 illustre un troisième mode de réalisation de l'invention pour lequel les éléments analogues au premier mode de réalisation, décrit précédemment, sont repérés par des références identiques, et ne sont pas décrits à nouveau.

Selon le troisième mode de réalisation, le système d'alimentation 10 est relié à une source de tension alternative 38. Un bus 40 de circulation de l'énergie électrique alternative est relié à la source de tension alternative 38. Des convertisseurs 16 sont reliés au bus de tension 40 par des transformateurs de tension 42.

Le fonctionnement de ce troisième mode de réalisation est analogue à celui du premier mode de réalisation décrit précédemment, et n'est pas décrit à nouveau.

Les avantages de ce troisième mode de réalisation sont analogues à ceux du premier mode de réalisation décrit précédemment.

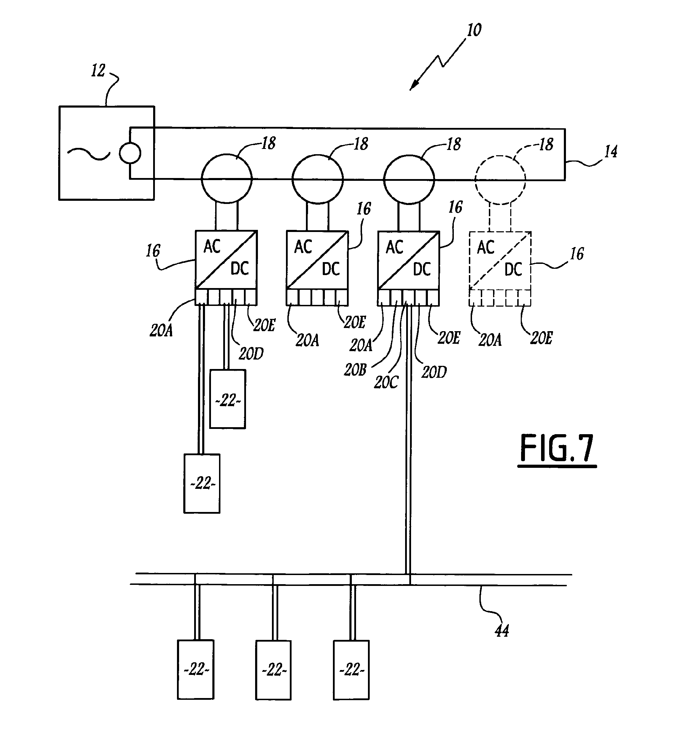

La figure 7 illustre un quatrième mode de réalisation de l'invention pour lequel les éléments analogues au premier mode de réalisation, décrit précédemment, sont repérés par des références identiques, et ne sont pas décrits à nouveau.

Selon le quatrième mode de réalisation, les convertisseurs 16 comportent des interfaces de connexion 20A,...,20E propres à être reliées à une pluralité de charges 22 via une barre de courant 44. Toutes les charges 22 reliées à cette barre de courant 44 seront démarrées en même temps, c'est-à-dire après expiration de la temporisation sélectionnée pour l'interface de connexion 20A, ..., 20E à laquelle est reliée la barre de courant 44. Il suffit donc de relier à la barre de courant 44 commune tous les appareils qui doivent démarrer en même temps.

Un tel système d'alimentation 10 est par exemple avantageux pour une installation de distribution d'eau avec des communications Ethernet entre différents serveurs et des communications de type Profibus et CAN qui contrôlent des pompes avec des moteurs électriques alimentés en tension continue et avec des vannes contrôlées électriquement.

Un autre exemple d'installation dans laquelle un tel système d'alimentation 10 est avantageux est un centre intelligent de contrôle de puissance et de moteurs, également appelé iPMCC - (de l'anglais *intelligent Power and Motor Control Center*).

Les charges 22 alimentées par ce système d'alimentation 10 sont, par exemple, des systèmes de communication pour des appareils propres à générer des données, tels que des disjoncteurs, des variateurs de vitesse de moteur, des relais de protection des moteurs. Les charges 22 sont également des systèmes qui ne gèrent que des flux informations comme des commutateurs de communication, des passerelles, des centralisateurs de données (de l'anglais *data logger*)*.* Les charges 22 sont encore des systèmes de contrôle, tels que des automates programmables et les relais de commande qui leur sont associés pour piloter d'autres charges.

Dans un tableau électrique, la diversité des besoins de nature de courant est très grande, en continu ou en alternatif, de niveau de tension par exemple égale à 24V, 48V, 110V, ou encore 240V. Le système d'alimentation 10 selon l'invention permet alors de gérer très facilement cette diversité, avec par exemple deux variantes de réalisation. Selon une première variante, chaque convertisseur d'énergie 16 est, par exemple, adapté pour fournir une tension respective entre ses bornes de sortie. Selon une deuxième variante, chaque borne de sortie du convertisseur 16 est réglable en tension par l'operateur.

## Revendications

1. Système (10) d'alimentation en énergie électrique continue d'au moins deux charges à partir d'une source d'énergie électrique alternative (12) ; le système (10) comprenant :
- un bus de circulation de l'énergie électrique alternative (14 ; 40) propre à être reliée à la source d'énergie électrique alternative (12 ; 38) ;
- au moins un convertisseur d'énergie alternative en énergie continue (16), relié au bus de circulation;
**caractérisé en ce que** le système (10) comprend
- au moins deux interfaces de connexion (20A, ..., 20E), chaque interface de connexion étant reliée à un convertisseur correspondant (16) et étant propre à être reliée à au moins une charge électrique pour l'alimentation en énergie continue de la ou chaque charge correspondante ;
- des moyens de commande (23) des interfaces de connexion (20A, ..., 20E), les moyens de commande (23) étant propres à décaler temporellement l'instant de démarrage de l'alimentation en énergie continue d'une interface à l'autre.

2. Système (10) selon la revendication 1, dans lequel la source d'énergie électrique alternative est une source de courant alternatif (12), et en ce que chaque convertisseur (16) est relié au bus de circulation via un transformateur de courant (18).

3. Système (10) selon la revendication 1, dans lequel la source d'énergie électrique alternative est une source de tension alternative, et en ce que chaque convertisseur (16) est relié au bus de circulation (40) via un transformateur de tension (42).

4. Système (10) selon l'une quelconque des revendications précédentes, dans lequel les interfaces de connexion (20A, ..., 20E) comprennent au moins un interrupteur commandable (28) et les moyens de commande (23) sont propres à commander la fermeture du ou de chaque interrupteur commandable.

5. Système (10) selon la revendication 4, dans lequel les moyens de commande (23) sont propres à envoyer un signal de fermeture à le ou chaque interrupteur (28) en fonction d'un signal de démarrage d'alimentation reçu.

6. Système (10) selon la revendication 5, dans lequel le signal de fermeture commande un moyen de temporisation (30) propre à chaque interface de connexion respective.

7. Système (10) selon la revendication 5 ou 6, dans lequel le système comprend une source d'énergie électrique alternative, ladite source d'énergie électrique alternative (12 ; 38) étant propre à émettre le signal de démarrage d'alimentation.

8. Système (10) selon l'une quelconque des revendications 5 à 7, dans lequel le signal de démarrage d'alimentation est un signal radioélectrique, et les moyens de commande (23) comportent un récepteur radioélectrique.

9. Système (10) selon l'une quelconque des revendications 5 à 7, dans lequel le signal de démarrage d'alimentation est un signal d'énergie électrique transmis via le bus de circulation de l'énergie électrique alternative (14 ; 40).

10. Système (10) selon l'une quelconque des revendications précédentes, dans lequel le système (10) comprend deux bus (14A, 14B) de circulation de l'énergie électrique alternative, propres à être reliées en parallèle à deux sources d'énergie électrique alternative, le ou chaque convertisseur (16) étant relié aux deux bus de circulation.

11. Système (10) selon l'une quelconque des revendications précédentes, dans lequel les interfaces de connexion (20A, ..., 20E) sont propres à être reliées à une pluralité de charges via une barre de courant (44).

12. Procédé de démarrage d'un système (10) d'alimentation en énergie électrique continue d'au moins deux charges, le système comprenant un bus de circulation d'énergie électrique alternative, au moins un convertisseur d'énergie alternative en énergie continue (16), aux moins deux interfaces de connexion (20A, ..., 20E) étant reliée à un convertisseur correspondant (16) et étant propre à être reliée à au moins une charge électrique pour l'alimentation en énergie continue de la ou chaque charge correspondante, le procédé comprenant les étapes suivantes :
- démarrer la circulation de l'énergie électrique alternative dans le bus de circulation;
- décaler temporellement l'instant de démarrage de l'alimentation en énergie continue d'une interface à l'autre, le décalage étant commandé par des moyens de commande (23).

## Patentansprüche

1. System (10) zur Versorgung von mindestens zwei Lasten mit elektrischer Gleichstromenergie aus einer Quelle (12) elektrischer Wechselstromenergie; wobei das System (10) umfasst:
- einen Wechselstromenergiekreislaufbus (14; 40), der sich dazu eignet, an die Wechseistromenergiequelle (12; 38) angeschlossen zu werden;
- mindestens einen Wechselstromenergie-/Gleichstromenergiewandler (16), der an den Kreislaufbus angeschlossen ist;
**dadurch gekennzeichnet, dass** das System (10) umfasst:
- mindestens zwei Verbindungsschnittstellen (20A, ..., 20E), wobei jede Verbindungsschnittstelle an einen entsprechenden Wandler (16) angeschlossen ist und sich dazu eignet, zur Gleichstromenergieversorgung der oder jeder entsprechenden Last an mindestens eine elektrische Last angeschlossen zu werden;
- Steuereinrichtungen (23) für die Verbindungsschnittstellen (20A, ..., 20E), wobei sich die Steuereinrichtungen (23) dazu eignen, den Startzeitpunkt der Gleichstromenergieversorgung von einer Schnittstelle zur anderen zeitlich zu versetzen.

2. System (10) nach Anspruch 1, wobei die Quelle elektrischer Wechselstromenergie eine Wechselstromquelle (12) ist, und jeder Wandler (16) über einen Stromwandler (18) an den Kreislaufbus angeschlossen ist.

3. System (10) nach Anspruch 1, wobei die Quelle elektrischer Wechselstromenergie eine Wechselspannungsquelle ist, und jeder Wandler (16) über einen Spannungstransformator (42) an den Kreislaufbus (40) angeschlossen ist.

4. System (10) nach einem der vorhergehenden Ansprüche, wobei die Verbindungsschnittstellen (20A, ..., 20E) mindestens einen steuerbaren Schalter (28) umfassen, und die Steuereinrichtungen (23) sich dazu eignen, das Schließen des oder jedes steuerbaren Schalters zu steuern.

5. System (10) nach Anspruch 4, wobei sich die Steuereinrichtungen (23) dazu eignen, in Abhängigkeit von einem empfangenen Versorgungsstartsignal ein Schließsignal an den oder jeden Schalter (28) zu schicken.

6. System (10) nach Anspruch 5, wobei das Schließsignal eine jeder jeweiligen Verbindungsschnittstelle eigene Verzögerungseinrichtung (30) ansteuert.

7. System (10) nach Anspruch 5 oder 6, wobei das System die Quelle elektrischer Wechselstromenergie umfasst, wobei sich die Quelle elektrischer Wechselstromenergie (12; 38) dazu eignet, das Versorgungsstartsignal zu verschicken.

8. System (10) nach einem der Ansprüche 5 bis 7, wobei das Versorgungsstartsignal ein elektrisches Funksignal ist, und die Steuereinrichtungen (23) einen elektrischen Funkempfänger umfassen.

9. System (10) nach einem der Ansprüche 5 bis 7, wobei das Versorgungsstartsignal ein Elektroenergiesignal ist, das über den Wechselstromenergiekreislaufbus (14; 40) übertragen wird.

10. System (10) nach einem der vorhergehenden Ansprüche, wobei das System (10) zwei Wechselstromenergiekreislaufbusse (14A, 14B) umfasst, die sich dazu eignen, mit zwei Wechselstromenergiequellen parallelgeschaltet zu werden, wobei der oder jeder Wandler (16) an die zwei Kreislaufbusse angeschlossen ist.

11. System (10) nach einem der vorhergehenden Ansprüche, wobei sich die Verbindungsschnittstellen (20A, ..., 20E) dazu eignen, über eine Stromschiene (44) an mehrere Lasten angeschlossen zu werden.

12. Verfahren zum Starten eines Systems (10) zur Versorgung mit elektrischer Gleichstromenergie mindestens zweier Lasten, wobei das System einen Wechselstromenergiekreislaufbus, mindestens einen Wechselstromenergie-/Gleichstromenergiewandler (16) umfasst, wobei mindestens zwei Verbindungsschnittstellen (20A, ..., 20E) an einen entsprechenden Wandler (16) angeschlossen sind und sich dazu eignen, zur Gleichstromenergieversorgung der oder jeder entsprechenden Last an mindestens eine elektrische Last angeschlossen zu werden, wobei das Verfahren die folgenden Schritte umfasst:
- Starten des Wechselstromenergiekreislaufs im Kreislaufbus;
- zeitliches Versetzen des Startzeitpunkts der Gleichstromenergieversorgung von einer Schnittstelle zu anderen, wobei das Versetzen durch die Steuereinrichtung (23) gesteuert wird.

## Claims

1. A system (10) for supplying direct electric power to at least two loads from an alternating electric power source (12), the system (10) comprising:
- a circulation bus for the alternating power (14; 40) adapted to be connected to the alternating power source (12; 38);
- at least one converter (16) for converting alternating power into direct power, connected to the circulation bus;
**characterized in that** the system (10) comprises
- at least two connection interfaces (20A, ..., 20E), each connection interface being connected to a corresponding converter (16) and being adapted to be connected to at least one electric load to supply direct electric power for the or each corresponding load;
- control means (23) for controlling the connection interfaces (20A, ..., 20E), the control means (23) being capable of time-shifting the start-up moment for the supply of direct power from one interface to the other.

2. The system (10) according to claim 1, wherein the alternating electric power source is an AC source (12), and in that each converter (16) is connected to the circulation bus by means of a current transformer (18).

3. The system (10) according to claim 1, wherein the alternating electric power source is an alternating voltage source, and in that each converter (16) is connected to the circulation bus (40) by a voltage transformer (42).

4. The system (10) according to any one of the preceding claims, wherein the connection interfaces (20A, ..., 20E) comprise at least one controllable switch (28) and the control means (23) are capable of controlling the closing of the or each controllable switch.

5. The system (10) according to claim 4, wherein the control means (23) are capable of sending a closing signal to the or each switch (28) based on the received power supply start-up signal.

6. The system (10) according to claim 5, wherein the closing signal controls a time delay mean (30) specific to each respective connection interface.

7. The system (10) according to claim 5 or 6, wherein the system comprises an alternating electric power source, said alternating electric power source (12; 38) being capable of emitting the power supply start-up signal.

8. The system (10) according to any one of claims 5 to 7, wherein the power supply start-up signal is a wireless signal, and the control means (23) include a wireless receiver.

9. The system (10) according to any one of claims 5 to 7, wherein the power supply start-up signal is an electric power signal transmitted via the circulation bus of the alternating electric power (14; 40).

10. The system (10) according to any one of the preceding claims, wherein the system (10) comprises two circulation buses (14A, 14B) for the alternating electric power, adapted to be connected in parallel to two alternating electric power sources, the or each converter (16) being connected to the two circulation buses.

11. The system (10) according to any one of the preceding claims, wherein the connection interfaces (20A, ..., 20E) are adapted to be connected to multiple loads via a current bar (44).

12. A method for starting up a direct electric power supply system (10) for at least two loads, the system comprising an alternating electric power circulation bus, at least one converter (16) for converting alternating power into direct power, at least two connection interfaces (20A, ..., 20E) being connected to a corresponding converter (16) and being adapted to be connected to at least one electric load to supply direct power to the or each corresponding load, the method comprising the following steps:
- starting the circulation of the alternating electric power in the circulation bus;
- time-shifting the start-up moment of the direct power supply from one interface to the other, the shifting being controlled by control means (23).
